# NEW EUROPEAN PATENT SPECIFICATION

(11) **EP 1 294 224 B2**
(45) Date of publication and mention of the opposition decision: **19.03.2008**
(45) Mention of the grant of the patent: 16.03.2005
(21) Application number: 01940810.3
(22) Date of filing: 21.06.2001
(51) Int. Cl.: A01K 5/01, B65D 85/72

(54) **FOOD PACK**
LEBENSMITTELBEHÄLTER
EMBALLAGE DE PRODUITS ALIMENTAIRES

(30) Priority: 23.06.2000 GB 0015441
(43) Date of publication of application: 26.03.2003
(73) Proprietor: MARS UK LIMITED, Slough, Berkshire SL1 4LG (GB)
(72) Inventor: BRUCE, Jennifer Susan, Leicestershire LE14 4RT (GB); BRADLEY, Richard G., Leicestershire LE14 4RT (GB); HALL, Simon, Reginald, Leicestershire LE14 4RT (GB); HARFORD, Stephen, Melton Mowbray Leicestershire LE13 1BB (GB)
(74) Representative: Rees, David Christopher
(86) International application number: PCT/GB2001/002757
(87) International publication number: WO 2001/097605

(56) References cited:
- EP-A- 0 769 252
- EP-A- 0 808 566
- DE-U- 29 711 410
- FR-A- 2 131 254
- GB-A- 1 474 931
- NL-A- 8 501 230
- US-A- 3 924 009
- US-A- 4 158 706
- US-A- 4 339 033
- US-A- 5 925 390
- US-A- 5 947 056
- PATENT ABSTRACTS OF JAPAN vol. 1998, no. 5, 30 April 1998 (1998-04-30) & JP 10 014501 A (NISHIN FLOUR MILLING CO LTD)
- http://uk.propacpetfood.com http://uk.pedigree.com
- Canine and Feline Nutrition: A Resource for Companion Animal Professionals. Duncan, L. (Ed) (1995) Mosby - Year Book Inc.
- Small Animal Clinical Nutrition III, Lewis et al (Eds) (1987) Mark Morris Associates.
- Focus on Quality: Palatability Testing. April 10-11 2002, Watt Publishing Company.
- Focus on Palatability 2000: Palatability Testing Methods. April 5-6 2000, Watt Publishing Company.

## Description

The present invention provides a food pack for a companion (or pet) animal. The food pack comprises at least two vessels. A first vessel holds a first pet food product and a second vessel holds a second pet food product. The composition of the food products in the two vessels are different. A third vessel holding a third pet food product may also be present. In a particular embodiment, the composition of the food products in two vessels differ in fat energy content by at least 5 % of the total calorific value of each product.

Food packs for a companion animal comprising two or more vessels, holding food products of different composition, are know, see e.g. document US-A-5 925 390.

It is a constant desideratum to determine novel feeding regimes and novel food combinations for companion animals. Such feeding regimes can contribute to overcoming feeding problems in fussy animals, unhealthy eating, lack of enjoyment of eating for the animals and lack of enjoyment or satisfaction experienced by the animal carer/owner.

The present invention provides a food pack for a companion animal according to claim 1, which contributes to overcoming the problems described above. A vessel is any object that is, or can be used as, a container. The food pack may further comprise one or more additional vessels. The additional third or further vessel may also hold a pet food product. The composition of such a pet food product may be the same or different from the composition of one or more other pet food products in the vessels of the food pack. The pet food product in the third vessel "the third pet food product" may be of a different composition from the composition of the first pet food product and from the composition of the second pet food product.

The food pack according to the present invention enables the provision, to a companion animal, of meals specifically formulated to meet a macronutrient preference for different times of the day. A macronutrient preference, by companion animals, for different times of the day has been identified by the inventors and provides the technical basis for the present invention. In accordance with these findings, the food pack of the present invention, in particular, provides a diet to enhance the animal's enjoyment of the food and to provide an increase (perceived or real) in enjoyment or satisfaction by the carer/owner of the companion animal.

The companion animals of the present invention are, in particular, the domestic cat *(Felis domesticus)* or the domestic dog *(Canis domesticus).* Other companion animals include, fish, bird and horse.

Different nutrient profiles of food (nutritional compositions) include different contents of one or more of fat, protein, carbohydrate, calorie density, fibre, vitamins or minerals. The composition of the first pet food product will have a higher or lower content of one or more of these nutritional components compared to the composition of the second pet food product.

In accordance with a typical feeding regime for a companion animal, the animal is fed one meal in the morning and one meal in the afternoon/evening, with optional treats and/or snacks in between. Accordingly, the food pack of the present invention preferably comprises one pet food product for feeding as the morning meal and one pet food product for feeding as the afternoon/evening meal. Additional snacks for in between meals or additions to the main meal (e.g. kibbles) may be included.

One macronutrient preference which has been shown by companion animals is for an increase in the total fat content of the afternoon/evening meal compared to the morning meal. Accordingly, the food pack of the invention includes one of the pet food products having a higher content of fat than one other pet food product in the pack. The product with the higher fat content is preferably fed to the companion animal as the afternoon/evening meal.

Another macronutrient preference has been shown by companion animals for a composition having a higher protein content for the morning food compared to the afternoon/evening meal. Accordingly, the food pack of the present invention may include one pet food product having a higher content of protein than one other pet food product in the pack. The product with the higher protein content is preferably fed to the pet animal as the main morning meal.

A preferred feature of the present invention results from a demonstrated increase in relative intake for the higher fat product in the afternoon/evening meal compared with products with a lower fat content. The higher fat content is preferably in replacement of protein or in replacement of carbohydrate.

According to the food pack of the present invention the fat content of the afternoon/evening food should be higher than the fat content of the morning food by at least 5 % of the total calorie content of the food. The calories contributed by the fat content of the food for the morning should be between 20 % and 70 % of the total calorie content of the food and the fat content of the food for the afternoon/evening should contribute between 25 % and 75 % of the total calorie content of the. The food fed in the afternoon/evening should be higher in fat content than the morning food by at least 5 % of the total calorific value of the product, preferably by 10%, more preferably by 15%.

Each pet food product may be a dry, semi-moist or a moist (wet) product. Wet food includes food that is usually sold in tins and has a moisture content of 70 % to 90%. Dry food includes food having a similar composition but with 5% to 15 % moisture, often presented as small biscuit - like kibbles. Semi-moist food includes food having a moisture content of from above 15 % up to 70 %. The amount of moisture in any product may influence the type of packaging that can be used or is required.

The pet food products as part of the food pack according to the present invention encompass any product that a pet consumes in its diet. Thus, the invention covers the standard food products as well as pet food snacks (for example snack bars, cereal bars, snacks, biscuits and sweet products). The food product may be a cooked product. It may incorporate meat or animal-derived material (such as beef, chicken, turkey, lamb, fish, blood plasma, marrowbone, etc or one or more thereof). The product alternative may be meat-free (preferably including a meat substitute such as soya, maize gluten or a soya product) in order to provide a protein source. The product may contain additional protein sources such as soya protein concentrate, milk, protein, gluten, etc. The product may also contain a starch source such as one or more grains (e.g. wheat, corn, rice, oats, barley, etc) or may be starch-free. The product may incorporate or be a gelatinised starch matrix. The product may incorporate one or more types of fibre such as sugar beet pulp, chicory pulp, chicory, coconut endosperm fibre, wheat fibre etc. The content of the product/ingredients contributes towards the macronutrient profile of the food. Thus, food products which according to the present invention provide a higher fat content will be designed accordingly. Dairy products, such as those incorporating a cream or a cheese sauce, may be suitable. The present invention is particularly relevant for a pet food product as described herein which is sold as a pet food, in particular a pet food for a dog or a cat.

The vessels of the food pack may be of any material, shape or size. Their function is, predominantly, to enable ease of use to the carer/owner of the companion animal and/or the ease of feeding by the companion animal.

The two or more vessels may be linked to form a single unit (i.e. two or more linked vessels). Such a unit may be in the form of a bowl or dish from which the animal can feed directly. In this embodiment, the packaging preferably includes a lid or lid type arrangement or seal for individual vessels such that one vessel can be opened independently of any other vessel. Preferably the single unit is of plastic, for example moulded plastic

An alternative arrangement is where the two or more vessels are not designed in particular for the animal to feed directly. Such packaging may be metal (usually in the form of a tin, can or flexifoil), plastic (including a plastic bottle), paper or card. One embodiment includes a single unit comprising a bag of flexible material divided into at least two vessels by a linking and separating section.

In another embodiment, the two or more vessels may be packed together by packaging means. In this situation two or more tins, cans, bags, flexifoils, etc may be packaged together for sale to the customer. This arrangement can provide the caret/owner of the companion animal with a food pack for their companion animal for a particular unit of time. Such a unit of time, for example, is one day. Such a food pack would thus include all of the necessary pet food products for their companion animal for one day. The food pack therefore allows the carer/owner to simply make available to the companion animal the food products in the food pack for a single day. This enables ease of use, particularly for owners/carers who take their companion animals away from home (travelling), and those who have busy lives as well as those owners/carers who do not necessarily know how much food to give to their companion animal. The two or more vessels may or may not be linked to form a single unit within the packaging means.

The packaging means enables individual food packs to be combined (as a multipack") for periods of time such as one week, or even longer. Accordingly, such a "multi-pack" may comprise seven individual food packs, each one for a day of the week. The individual food packs may be identical or different.

The food pack according to the present invention provides benefits to the companion animal of increased acceptance/palatability increased in enjoyment in feeding and/or increase in enjoyment or satisfaction by the carer/owner of the animal.

The enjoyment of the animal and/or increase in acceptance/palatability can be determined, for example, by one or more of the following:
- An increase in the quantity of food consumed;
- A decrease in the frequency of refusals to eat over an extended period of time;
- An increase in enthusiasm during the meal as indicated by a reduction in the time taken to start a meal and/or an increase in the speed at which food is consumed;
- The animal chooses the food over another food;
- The animal refuses other foods;
or by any other behaviour by the animal which is taken by the owner/carer to be an indication of enjoyment of the food, for example:
- The animal rubs around the owner /carer when serving the food.
- The animal is inactive/rests or sleeps after eating.
- The animal licks itself or washes after eating.

The invention is described with reference to the drawings, where:
Figure 1 shows average quantities consumed in the first 20 minutes of a meal in relation to wet diets that differ in terms of their protein and fat content for morning and afternoon meals.
Figure 2 shows average quantities consumed in the first 20 minutes of a meal in relation to wet diets that differ in terms of their content of protein fat and carbohydrate for morning and afternoon meals.
Figure 3 shows average quantities consumed of dry diets in a 60 minute morning meal and a 30 minute afternoon meal where the diets vary in their content of fat and carbohydrate.

The invention will now be described with reference to the following, non-limiting examples:

### Examples

Macronutrient energy content for all examples (and in accordance with the embodiments of the present invention) is determined by the calculations in Annex 1. The following data demonstrate the difference between morning and afternoon macronutrient preferences.

### Example 1: Studies with wet cat food diets of varying protein and fat contents.

Diets were designed containing different levels of the macronutrients protein and fat. All diets were isocaloric and contained 3 different ratios of protein to fat calories i.e. 10%:90%, 40%: 60% and 70%: 30% respectively (increasing in calories derived from protein). All 3 diets were fed in rotation for 30 days, i.e. each cat was fed one diet per day; therefore each diet was experienced 10 times. Food was provided for 45 minutes in the morning, then the same diet was fed overnight.

Feeding data from the first 20 minutes of the morning meal and the first 20 minutes of the afternoon meal showed that in the morning, there was similar separation of 10%, 40% & 70% protein calorie diets. Overall, these data indicate that cats prefer diets containing higher protein in the morning.

In the afternoon meal, there was less preference for the 70 % diet relative to 40 % & 10% PER diets. Overall, these data indicate that cats preferred relatively lower protein (and hence higher fat) in the afternoon.

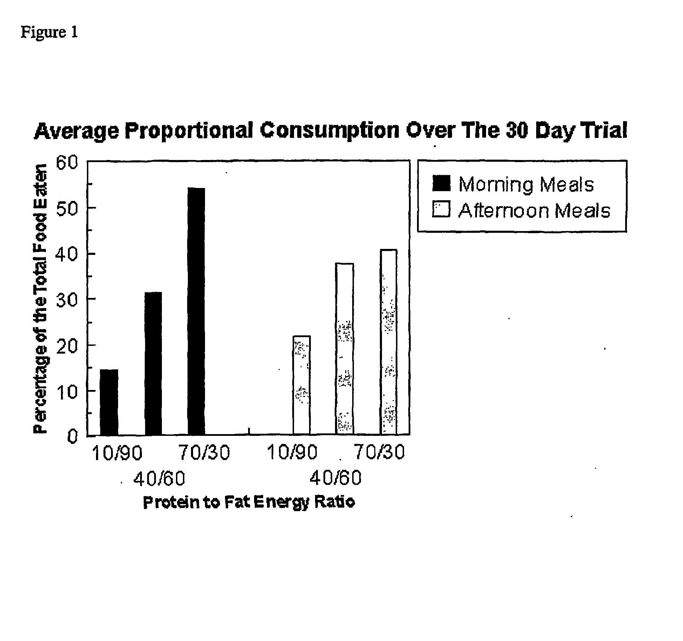

The average intake of each diet over the whole 30 days of the trial, for morning and afternoon meals, is shown in figure 1. The consumption of each product is expressed as a percentage of the total eaten within the all the meals in the morning or all the meals in the afternoon.

### Example 2: Studies with wet cat food diets of varying protein, fat and carbohydrate contents.

Canned diets were designed that had the same base meat recipe, to which was added isocaloric amounts of protein, fat and carbohydrate. All 3 diets were fed in rotation for 30 days, i.e. each cat was fed one diet per day; therefore each diet was experienced 10 times. Food was provided for 45 minutes in the morning, then the same product was fed for 45 minutes in the afternoon.

Feeding data from the first 20 minutes of the morning meal and the first 20 minutes of the afternoon meal showed that in the morning, preference was for the products supplemented with protein over the products supplemented with fat over the products supplemented with carbohydrate.

In the afternoon meal, fat is significantly preferred over the other products. Overall, these data indicate that cats preferred higher fat (rather than protein or carbohydrate) in the afternoon.

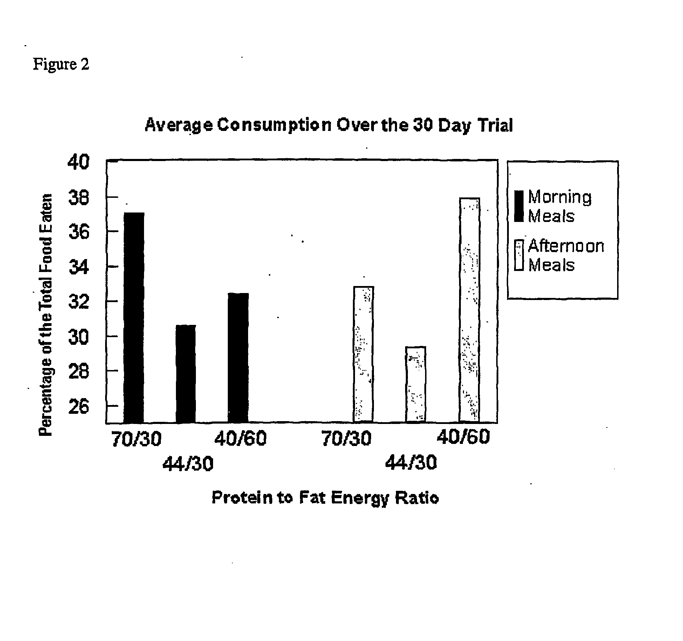

The average intake of each diet over the whole 30 days of the trial, for morning and afternoon meals, is shown in figure 2. The consumption of each product is expressed as a percentage of the total eaten within the all the meals in the morning or all the meals in the afternoon.

Further data have been obtained using these same products under a different feeding regimen, i.e. a 45 minute meal in the morning followed by an overnight meal of the same product. Feeding data from the first 20 minutes of the morning meal and the first 20 minutes of the afternoon meal showed that the preference was clearly for fat in the afternoon. A preference is also shown for protein in the morning.

### Example 3: Studies with dry diets of various fat and carbohydrate contents

Five dry diets of approximately constant protein content, but varying in fat and carbohydrate content were fed in rotation for 5 days, i.e. each cat was fed one diet per day but different groups of cats were exposed to the diets in different orders. Food was provided for 60 minutes in the morning and then the same product was fed for 30 minutes in the afternoon.

The diets had fat contents of 21%, 16.5%, 12%, 10 % and 9% on a dry matter basis, equivalent to fat energy contents of 44%, 37%, 28%, 25% and 23%.

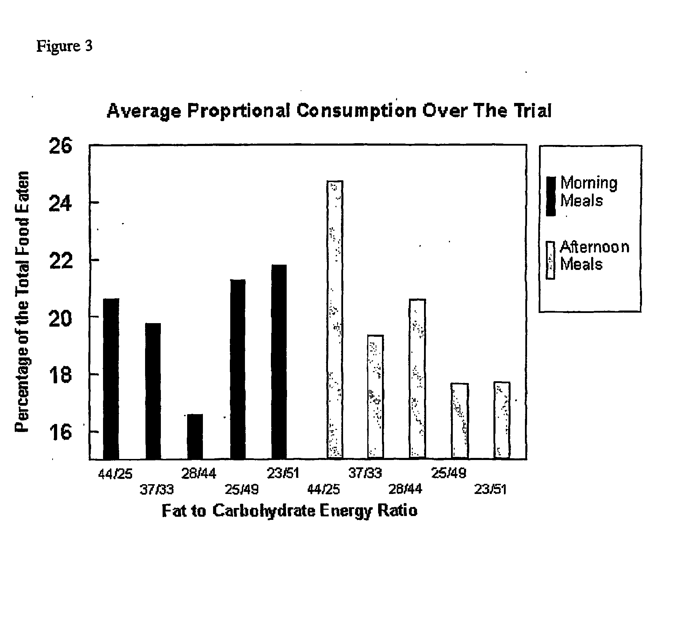

In the morning meals there was little difference in the mean intakes of the high and low fat dry diets. However, in the afternoon meal, the average data showed a clear trend to higher intakes for the high fat products rather than the low fat products, see figure 3.

### Annex 1

Calculations for predicting the metabolisable energy (PME) of foods for companion animals.

These calculations use modified Atwater factors based on recommended texts e.g. Association of American Feed Control Officials, and species specific studies.

### Cat Products:

Canned: (% Protein x 3.9) + (% Fat x 7.7) + (% NFE x 3.0) -5.0 = kcal PME/100g product

Dry: (% Protein x 3.5) + (% Fat x 8.5) + ((% NFE -% Crude Fibre) x 3.5) = kcal PME/100g product

### Dog Products

Canned and Dry: (% Protein x 3.5) + (% Fat x 8.5) + ((% NFE - % Crude. Fibre) x 3.5) = kcal PME/100g product

NFE = Nitrogen Free Extract and is calculated by difference: 100 - (% Protein + % Fat + % Ash + % Moisture)

The % protein, fat, ash, moisture and/or crude fibre are determined in accordance with the Standard Proximate Analysis as set out in Pearson's Composition and Analysis of Foods, Ninth Edition (1991).

## Claims

1. A food pack for a companion animal comprising at least two vessels, wherein;
a first vessel holds a first pet food product; and a second vessel holds a second pet food product, wherein the composition of the first pet food product and the composition of the second pet food product are specifically formulated to meet a macronutrient preference of the animal for different times of the day, the composition of the first pet food product and the composition of the second pet food product differing in fat energy content by at least 5% of the total calorific value of each product, wherein the fat content of the afternoon/evening food is higher than the fat content of the morning food by at least 5% of the total calorie content of the food and wherein the first pet food product has a fat content of from 20% to 70% of the total calorific value and the second pet food product has a fat content of from 25% to 75% of the total calorific value.

2. A food pack for a companion animal as claimed in claim 1, which comprises a third vessel.

3. A food pack for a companion animal as claimed in claim 2, wherein the third vessel holds a third pet food product and wherein the third pet food product is of a different composition from the composition of the first pet food product and from the composition of the second pet food product.

4. A food pack for a companion animal, as claimed in any one of claims 1 to 3, wherein the composition of the first pet food product has a higher content of protein than the composition of the second pet food product.

5. A food pack for a companion animal as claimed in any one of claims 1 to 4, wherein the composition of the second pet food product has a higher content of fat than the composition of the first pet food product.

6. A food pack for a companion animal, as claimed in any one of claims 1 to 5, wherein one of the pet food products is a dry composition.

7. A food pack for a companion animal as claimed in any one of claims 1 to 6, wherein one of the pet food products is a drink.

8. A food pack for a companion animal, as claimed in any one of claims 1 to 7, wherein the first pet food product is savoury and the second pet food product is sweet.

9. A food pack for a companion animal, as claimed in any one of claims 1 to 8, wherein at least two vessels are linked to form a single unit.

10. A food pack for a companion animal, as claimed in claim 9, wherein the single unit is of plastic.

11. A food pack for a companion animal, as claimed in claim 9, wherein the single unit comprises a bag of flexible material divided into at least two vessels by a linking and separating section.

12. A food pack for a companion animal, as claimed in any one of claims 1 to 8, which comprises at least two vessels packed together by packaging means.

13. A food pack for a companion animal, as claimed in claim 12, wherein at least two vessels are not linked.

14. A food pack for a companion animal, as claimed in any one of claims 2 to 13, wherein the third vessel is not linked to either of the first vessel or the second vessel.

15. A food pack for a companion animal, as claimed in any one of claims 1 to 14, wherein the first pet food product and the second pet food product additionally differ in their content of one or more of: protein, carbohydrate, calorie density, fibre, vitamins or minerals.

## Patentansprüche

1. Futterpackung für ein Begleittier, das wenigstens zwei Gefäße umfasst, wobei:
ein erstes Gefäß ein erstes Haustierfutterprodukt aufnimmt; und ein zweites Gefäß ein zweites Haustierfutterprodukt aufnimmt, wobei die Zusammensetzung des ersten Haustierfutterproduktes und die Zusammensetzung des zweiten Haustierfutterproduktes spezifisch formuliert sind, um eine Makronährstoffpräferenz des Tieres für unterschiedliche Zeiten des Tages zu erfüllen, wobei die Zusammensetzung des ersten Haustierfutterproduktes und die Zusammensetzung des zweiten Haustierfutterproduktes sich im Fettenergiegehalt um wenigstens 5% des Gesamtkalorienwertes jeden Produktes unterscheiden, wobei der Fettgehalt des Nachmittag-/Abendfutters um wenigstens 5% des Gesamtkaloriengehaltes des Futters höher ist als der Fettgehalt des Morgenfutters und wobei das erste Haustierfutterprodukt einen Fettgehalt von 20% bis 70% des Gesamtkalorienwertes hat und das zweite Haustierfutterprodukt einen Fettgehalt von 25% bis 75% des Gesamtkalorienwertes hat.

2. Futterpackung für ein Begleittier nach Anspruch 1, das ein drittes Gefäß umfasst.

3. Futterpackung für ein Begleittier nach Anspruch 2, **dadurch gekennzeichnet, daß** das dritte Gefäß ein drittes Haustierfutterprodukt aufnimmt und daß das dritte Haustierfutterprodukt eine von der Zusammensetzung des ersten Haustierfutterproduktes und von der Zusammensetzung des zweiten Haustierfutterproduktes unterschiedliche Zusammensetzung hat.

4. Futterpackung für ein Begleittier nach einem der Ansprüche 1 bis 3, **dadurch gekennzeichnet, daß** die Zusammensetzung des ersten Haustierfutterproduktes einen höheren Gehalt an Protein hat als die Zusammensetzung des zweiten Haustierfutterproduktes.

5. Futterpackung für ein Begleittier nach einem der Ansprüche 1 bis 4, **dadurch gekennzeichnet, daß** die Zusammensetzung des zweiten Haustierfutterproduktes einen höheren Gehalt an Fett hat als die Zusammensetzung des ersten Haustierfutterproduktes.

6. Futterpackung für ein Begleittier nach einem der Ansprüche 1 bis 5, **dadurch gekennzeichnet, daß** eines der Haustierfutterprodukte eine trockene Zusammensetzung ist.

7. Futterpackung für ein Begleittier nach einem der Ansprüche 1 bis 6, **dadurch gekennzeichnet, daß** eines der Haustierfutterprodukte ein Getränk ist.

8. Futterpackung für ein Begleittier nach einem der Ansprüche 1 bis 7, **dadurch gekennzeichnet, daß** das erste Haustierfutterprodukt pikant ist und das zweite Haustierfutterprodukt süß ist.

9. Futterpackung für ein Begleittier nach einem der Ansprüche 1 bis 8, **dadurch gekennzeichnet, daß** wenigstens zwei Gefäße verbunden sind, um eine einzelne Einheit zu bilden.

10. Futterpackung für ein Begleittier nach Anspruch 9, **dadurch gekennzeichnet, daß** die einzelne Einheit aus Kunststoff ist.

11. Futterpackung für ein Begleittier nach Anspruch 9, **dadurch gekennzeichnet, daß** die einzelne Einheit einen Beutel aus flexiblem Material umfasst, der durch einen Verbindungs- und Trennabschnitt in wenigstens zwei Behälter unterteilt ist.

12. Futterpackung für ein Begleittier nach einem der Ansprüche 1 bis 8, die wenigstens zwei durch Verpackungsmittel zusammen verpackte Gefäße umfasst.

13. Futterpackung für ein Begleittier nach Anspruch 12, **dadurch gekennzeichnet, daß** wenigstens zwei Gefäße nicht verbunden sind.

14. Futterpackung für ein Begleittier nach einem der Ansprüche 2 bis 13, **dadurch gekennzeichnet, daß** das dritte Gefäß weder mit dem ersten Gefäß noch mit dem zweiten Gefäß verbunden ist.

15. Futterpackung für ein Begleittier nach einem der Ansprüche 1 bis 14, **dadurch gekennzeichnet, daß** das erste Haustierfutterprodukt und das zweite Haustierfutterprodukt sich zusätzlich in ihrem Gehalt an einem oder mehreren von: Protein, Kohlehydrat, Kaloriendichte, Faser, Vitamine oder Mineralien unterscheiden.

## Revendications

1. Emballage de produits alimentaires pour animal de compagnie comprenant au moins deux récipients, dans lequel :
un premier récipient contient un premier produit alimentaire pour animal de compagnie ; et un deuxième récipient contient un second produit alimentaire pour animal de compagnie, dans lequel la composition du premier produit alimentaire pour animal de compagnie et la composition du deuxième produit alimentaire pour animal de compagnie sont spécifiquement formulés pour répondre à une préférence de macronutrition de l'animal à différentes heures de la journée, la composition du premier produit alimentaire pour animal de compagnie et la composition du deuxième produit alimentaire pour animal de compagnie différant par la teneur en énergie grasse à hauteur de 5 % au moins de la valeur calorifique totale de chaque produit, dans lequel la teneur en graisse dans l'aliment de l'après-midi/soirée est plus grande que la teneur en graisse de l'aliment du matin de au moins 5% de la valeur calorique totale de l'aliment et dans lequel le premier produit alimentaire pour animal de compagnie a une teneur en graisse de 20% à 70% de la valeur calorique totale et le deuxième produit alimentaire pour animal de compagnie a une teneur de graisse de 25% à 75% de la valeur calorique totale.

2. Emballage de produits alimentaires pour animal de compagnie selon la revendication 1, comprenant un troisième récipient.

3. Emballage de produits alimentaires pour animal de compagnie selon la revendication 2, dans lequel le troisième récipient contient un troisième produit alimentaire pour animal de compagnie et dans lequel le troisième produit alimentaire pour animal de compagnie est d'une composition différente de la composition du premier produit alimentaire pour animal de compagnie et de la composition du deuxième produit alimentaire pour animal de compagnie.

4. Emballage de produits alimentaires pour animal de compagnie selon l'une quelconque des revendications 1 à 3, dans lequel la composition du premier produit alimentaire pour animal de compagnie présente une teneur en protéine supérieure à la composition du deuxième produit alimentaire pour animal de compagnie.

5. Emballage de produits alimentaires pour animal de compagnie selon l'une quelconque des revendications 1 à 4, dans lequel la composition du deuxième produit alimentaire pour animal de compagnie présente une teneur en graisse supérieure à la composition du premier produit alimentaire pour animal de compagnie.

6. Emballage de produits alimentaires pour animal de compagnie selon l'une quelconque des revendications 1 à 5. dans lequel l'un des produits alimentaires pour animal de compagnie est une composition sèche.

7. Emballage de produits alimentaires pour animal de compagnie selon l'une quelconque des revendications 1 à 6, dans lequel l'un des produits alimentaires pour animal de compagnie est une boisson.

8. Emballage de produits alimentaires pour animal de compagnie selon l'une quelconque des revendications 1 à 7, dans lequel le premier produit alimentaire pour animal de compagnie est salé et le deuxième produit alimentaire pour animal de compagnie est sucré.

9. Emballage de produits alimentaires pour animal de compagnie selon l'une quelconque des revendications 1 à 8, dans lequel au moins deux récipients sont reliés pour former une seule unité.

10. Emballage de produits alimentaires pour animal de compagnie selon la revendication 9, dans lequel la simple unité est en plastique.

11. Emballage de produits alimentaires pour animal de compagnie selon la revendication 9, dans lequel la simple unité comprend un sac de matériau souple divisé en au moins deux récipients par une section de connexion et de séparation.

12. Emballage de produits alimentaires pour animal de compagnie selon l'une quelconque des revendications 1 à 8, comprenant au moins deux récipients emballés ensemble par des moyens d'emballage.

13. Emballage de produits alimentaires pour animal de compagnie selon la revendication 12, dans lequel au moins deux récipients ne sont pas reliés.

14. Emballage de produits alimentaires pour animal de compagnie selon l'une quelconque des revendications 2 à 13, dans lequel le troisième récipient n'est pas connecté au premier récipient ou au deuxième récipient.

15. Emballage de produits alimentaires pour animal de compagnie selon l'une quelconque des revendications 1 à 14, dans lequel le premier produit alimentaire pour animal de compagnie et le deuxième produit alimentaire pour animal de compagnie diffèrent en plus par leur teneur en un ou plusieurs des éléments suivants : protéine, hydrate de carbone, densité calorique, fibre, vitamines ou minéraux.
